# FASCICULE DE BREVET EUROPEEN

(11) **EP 1 150 556 B1**
(45) Date de publication et mention de la délivrance du brevet: **23.10.2002**
(21) Numéro de dépôt: 00900575.2
(22) Date de dépôt: 14.01.2000
(51) Int. Cl.: A01B 3/26, A01B 79/02, A01B 49/04

(54) **DISPOSITIF POUR LE TRAITEMENT D'UN MATERIAU HUMIDE EPANDU AU SOL**
VORRICHTUNG ZUR BEHANDLUNG EINER AUF DEN BODEN AUSGEBREITETEN FEUCHTMASSE
DEVICE FOR TREATING A WET MATERIAL THAT IS SPREAD ON SOIL

(30) Priorité: 10.02.1999 FR 9901557
(43) Date de publication de la demande: 07.11.2001
(73) Titulaire: ETE INTERNATIONAL, 30100 Alès (FR)
(72) Inventeur: MAILLOT, Max, F-30100 Alès (FR)
(74) Mandataire: Plaçais, Jean-Yves
(86) Numéro de dépôt international: FR0000067
(87) Numéro de publication internationale: WO00047032

(56) Documents cités:
- CA-A- 900 788
- FR-A- 650 917
- FR-A- 1 388 883
- US-A- 1 369 970

## Description

L'invention se rapporte au traitement des matériaux d'épandage.

Elle concerne plus particulièrement un dispositif pour le traitement d'un matériau humide, en particulier d'une boue, épandu au sol.

Il est connu d'épandre sur le sol un matériau humide, tel que par exemple une boue, notamment en vue de son séchage. Le matériau peut soit être laissé à demeure sur le sol, soit être récupéré ensuite en vue d'une éventuelle valorisation.

Par l'expression "matériau humide", on entend désigner ici un matériau naturel, un matériau élaboré, ou encore un matériau de rejet, qui possède une teneur plus ou moins élevée en humidité et, par conséquent, une consistance plus où moins fluide.

De tels matériaux comprennent de manière non limitative les matériaux suivants : les matériaux de type boue à teneur élevée en humidité (comme les boues de stations d'épuration des eaux usées, les boues industrielles, les boues de lavage, les boues de pompage, etc.) ; les matériaux de carrières ou de terrassement ; les graves argileuses et autres matériaux minéraux dont il convient de séparer les fines ; les ordures ménagères ; les cendres et les mâchefers ; les déchets de l'agriculture ou de l'industrie agro-alimentaire ; etc.

Ainsi, le brevet français N° 94 11140 de la Demanderesse décrit un procédé et un dispositif de traitement d'un matériau humide dans lequel ce matériau est soumis à une opération préalable de séchage sous l'action d'énergies essentiellement naturelles, puis est soumis à différentes opérations de séparation.

Jusqu'à présent, le matériau humide était simplement épandu sur le sol en couche plus ou moins épaisse pour être séché et était ensuite récupéré le cas échéant, sans être soumis entre temps à une ou plusieurs opérations intermédiaires.

On connaît par ailleurs, d'après CA 900 788 A, un dispositif pour le traitement d'un matériau, qui comprend une charrue propre à être attelée à un tracteur et comprenant un châssis portant une multiplicité d'outils, un réservoir propre à contenir un liquide de traitement, une. pompe reliée au réservoir et une rampe d'aspersion portée à l'arrière du châssis et reliée à la pompe pour envoyer le liquide de traitement sur le matériau retourné et mélangé par les outils.

Toutefois, ce dispositif connu sert à pulvériser un produit chimique herbicide pour empêcher le développement de mauvaises herbes sur un sol préalablement retourné par une charrue classique.

US-A-1 369 970 divulgue une charrue munie d'une rampe destinée à distribuer de l'eau d'irrigation.

Enfin, FR 650 917 A et FR-A-1 388 883 divulguent différents types de charrues.

L'invention vise essentiellement à procurer des moyens pour traiter un matériau humide épandu au sol, en vue notamment de modifier ou améliorer son état, ou encore de le rendre plus apte à subir des opérations ultérieures.

Elle propose à cet effet un dispositif de traitement d'un matériau humide, lequel comprend une charrue propre à être attelée à un tracteur, comme enseigné par le document CA 900 788 A.

Conformément à l'invention, ce dispositif est caractérisé en ce que les outils sont des socs ayant une forme choisie pour retourner et mélanger superficiellement un matériau humide, en particulier une boue, épandu au sol, sans défoncer le matériau et sans défoncer le sol sous-jacent.

Ainsi, le dispositif de l'invention s'apparente à une charrue d'un type particulier qui combine l'action de socs de forme adaptée pour retourner et mélanger le matériau, sans défoncer ce matériau ni le sol sous-jacent, et l'action de moyens propres à envoyer un liquide de traitement sur le matériau retourné et mélangé par les socs.

Il en résulte un mélange intime du matériau et du liquide de traitement, ce qui permet de modifier ou améliorer l'état du matériau.

Par liquide de traitement on entend désigner ici aussi bien un liquide, qu'une solution ou encore une suspension. Ce liquide de traitement peut être choisi parmi un grand nombre de liquides, et cela en fonction du but fixé. A titre d'exemples non limitatifs, ce liquide de traitement peut être un produit solidifiant, ou au contraire un produit liquéfiant, un produit désodorisant ou anti-odeur, un produit contenant des bactéries, un produit contenant des catalyseurs, etc.

Dans l'invention, on utilise avantageusement des socs ayant un profil asymétrique, et comprenant des socs à profil à droite et des socs à profil à gauche. Ces socs ont une forme choisie pour permettre de travailler des matériaux de différentes natures, de consistance plus ou moins pâteuse, pour travailler la couche de matériau sans la défoncer, et sans retourner le sol sous-jacent.

Selon une autre caractéristique de l'invention, chaque socs comprend une pointe d'attaque relevée et retournée vers le haut pour retourner et mélanger superficiellement le matériau humide et un versoir de forme et de dimension choisie en fonction du matériau à traiter.

Avantageusement, le dispositif comprend en outre des moyens de fixation réglables propres à disposer les socs en des emplacements choisis du châssis.

Dans une forme de réalisation préférée de l'invention, le châssis comprend des barres longitudinales espacées sur lesquelles les socs peuvent être fixés chacun de manière réglable dans le sens de la longueur et dans le sens de la hauteur.

Avantageusement, les barres longitudinales sont fixées réglables sur deux poutres transversales pour permettre de régler leurs espacements mutuels.

L'invention prévoit également que le dispositif comprend un soc double, encore appelé "butteur", propre à être fixé dans une position centrale du châssis pour stabiliser le déplacement de la charrue.

Avantageusement, le réservoir et la pompe sont portés par le châssis.

La pompe est avantageusement une pompe basse pression à alimentation électrique.

Selon encore une autre caractéristique de l'invention, la rampe d'aspersion comprend au moins un tronçon orientable par rapport au châssis pour envoyer le liquide de traitement avec une orientation réglable.

La rampe d'aspersion comprend avantageusement des buses directionnelles propres à envoyer le liquide de traitement vers les socs.

La charrue de l'invention est de préférence une charrue de type porté et elle comprend un attelage propre à permettre son attache à la fixation trois points d'un tracteur.

Dans la description qui suit, faite seulement à titre d'exemple, on se réfère aux dessins annexés, sur lesquels :
- la figure 1 est une vue de côté d'un dispositif selon l'invention appliqué au traitement d'un matériau humide épandu au sol ;
- la figure 2 est une vue en perspective du châssis du dispositif de la figure 1, le châssis étant montré avec les socs ;
- la figure 3 est une vue de dessus du dispositif de la figure 1, représenté sans les socs ;
- la figure 4 est une vue partielle de l'extrémité avant du châssis du dispositif ;
- la figure 5 est une vue partielle de l'extrémité arrière du châssis du dispositif ; et
- la figure 6 est une vue partielle latérale du châssis montrant la fixation d'un soc.

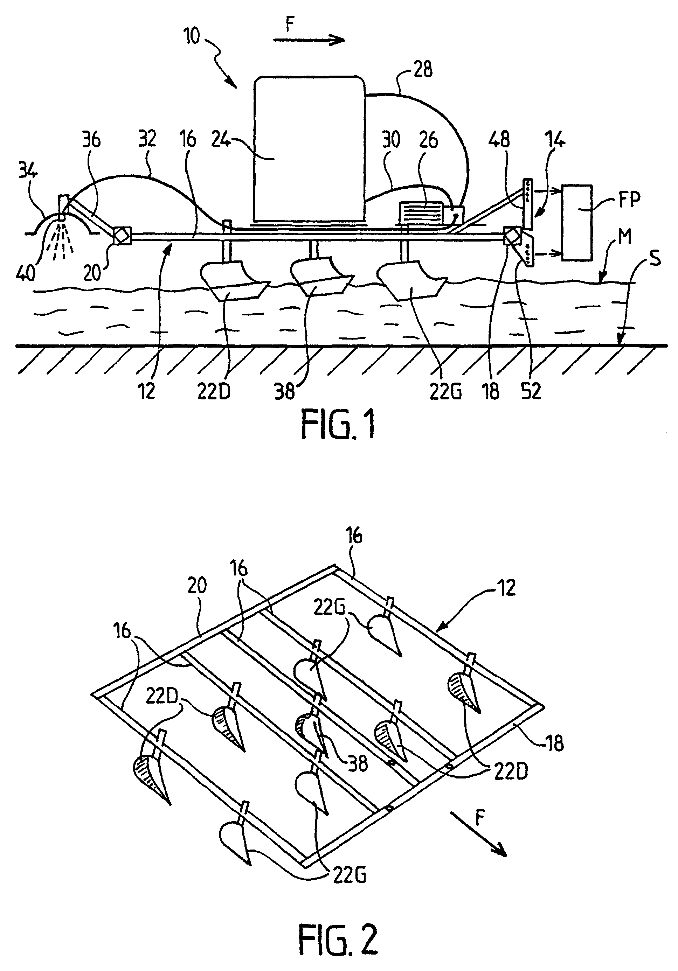

On se réfère tout d'abord à la figure 1 qui représente ur. dispositif 10 selon l'invention appliqué au traitement d'un matériau humide M, par exemple une boue d'épuration des eaux usées. Ce matériau M est épandu en couche plus ou moins épaisse sur un sol S.

Le dispositif 10 s'apparente à une charrue et est attelé à la fixation trois points FP (représentée schématiquement) d'un tracteur (non représenté). Le dispositif 10 comprend un châssis métallique 12, dont la structure sera décrite plus loin, muni en partie avant d'un attelage 14 propre à être solidarisé à la fixation trois points FP au tracteur.

Le châssis 12 (figure 2) comprend des barres longitudinales 16 disposées parallèles et espacées les unes des autres qui, dans l'exemple, sont au nombre de cinq. Ces barres longitudinales sont destinées à être placées horizontalement au dessus du matériau M et dans le sens de la longueur du dispositif, c'est-à-dire dans le sens de déplacement tel que matérialisé par la flèche F sur les figures 1 et 2. Ces barres longitudinales sont fixées réglables, à leurs extrémités respectives, sur deux poutres transversales : une poutre avant 18 qui porte l'attelage 14 et une poutre arrière 20.

Les barres longitudinales 16 servent de supports à une pluralité de socs qui, dans l'exemple représenté, sont au nombre de huit. Ces socs ont un profil asymétrique et comprennent des socs 22D à profil à droite et des socs 22G à profil à gauche. Ces socs sont montés amovibles sur les barres 16 et peuvent être placés en des emplacements choisis du châssis, comme on le verra plus lcin.

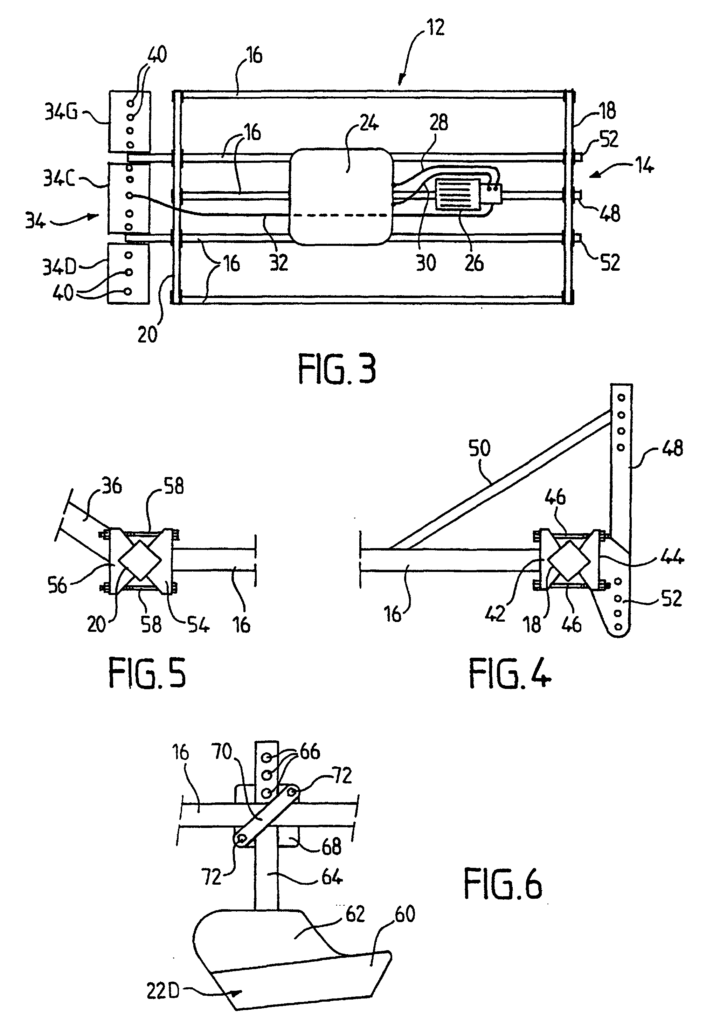

Le châssis 12 ports, dans sa partie centrale, un réservoir 24 (figures 1 et 3), encore appelé cuve, destiné à contenir un liquide de traitement qui peut avoir différentes propriétés, par exemple des propriétés liquéfiantes, solidifiantes, désodorisantes, bactériennes, etc.

Le réservoir 24 est relié à une pompe 26 qui, dans l'exemple, est une pompe basse pression à alimentation électrique. Cette pompe est avantageusement alimentée par une batterie indépendante portée par le châssis 12, bien qu'elle puisse aussi être alimentée directement à partir de la batterie du tracteur. La pompe 26 est reliée au réservoir par une conduite d'alimentation 28 et une conduite de retour 30. Par ailleurs, la sortie de la pompe est reliée, par l'intermédiaire d'une conduite de sortie 32 à une rampe d'aspersion 34 placée à l'arrière du châssis 12 et reliée à la poutre arrière 20 par des supports 36.

Le châssis 18 porte en outre (figures 1 et 2) dans sa partie centrale un soc double 38, encore appelé "butteur", propre à stabiliser le déplacement de la charrue. Ce butteur peut être placé en position réglable le long de la barre longitudinale 16 qui s'étend dans la partie centrale du châssis.

La rampe d'aspersion 34 comprend, dans l'exemple, trois tronçons orientables : un tronçon central 34 C encadré par un tronçon droit 34 D et un tronçon gauche 34 G (figure 3). La rampe d'aspersion comprend des buses directionnelles 40 (figures 1 et 3) propres à envoyer le liquide de traitement vers les socs.

Comme on le verra plus loin, les socs utilisés dans l'invention sont différents des socs classiques d'une charrue qui, eux, sont destinés à retourner le sol.

Dans l'invention, les sccs 22D et 22G ont une forme choisie, adaptée pour retourner et mélanger le matériau M sans le défoncer et, surtout, sans défoncer le sol S sous-jacent. La structure des socs sera décrite plus loin en référence à la figure 6.

On se réfère maintenant à la figure 4 pour décrire plus particulièrement la fixation réglable des barres longitudinales 16 sur la poutre avant 18. Cette dernière est une poutre creuse de section carrée dont les côtés sont disposés à 45° par rapport à l'horizontale.

Les barres longitudinales 16 sont également des poutres creuses de section carrée dont les côtés sont soit horizontaux, soit verticaux. Chacune des 16 comporte à son extrémité avant une bride soudée avant 42 destinée à être reliée à une bride vissée 44 par l'intermédiaire de deux tirants 46 du type vis-écrou (figure 4).

La bride vissée 44 qui correspond à la barre centrale 16 sert de support à un support central 48 dirigé verticalement vers le haut et faisant partie de l'attelage 14. Le support central 48 est relié par un étai 50 à la barre 16 située en position centrale. Les brides vissées 44 situées adjacentes à la bride 44 précitée sont reliées respectivement à deux supports latéraux 52, orientés vers le bas et faisant partie également de l'attelage 14 du dispositif (figures 3 et 4).

Chacune des barres 16 comporte à son extrémité arrière (figure 5) une bride soudée arrière 54 analogue à la bride 42. Cette bride soudée arrière 54 est destinée à coopérer avec une bride vissée 56 par l'intermédiaire de deux tirants 58 du type vis-écrou. Sur deux des brides 56 sont soudées les supports 36 (figures 1, 3 et 5) servant à la fixation de la rampe d'aspersion.

On se réfère maintenant à la figure 6 pour décrire plus particulièrement la structure d'un des socs. Le soc représenté ici est un soc 22 D du type à profil à droite. Il comprend un soc proprement dit qui possède un profil asymétrique tourné vers la droite avec une pointe d'attaque 60 relevé et tourné vers le haut. Au dessus de cette pointe est disposé un versoir 62 qui à une forme et des dimensions choisies en fonction du matériau à traiter. En outre, ce versoir présente un angle d'ouverture qui est choisi aussi en fonction du matériau à traiter.

Le soc est monté à l'extrémité inférieure d'une tige 64 comportant, à sa partie supérieure, une série de trous alignés 66. La tige 64 est portée par une platine 68 de forme générale rectangulaire qui est montée amovible et qui peut être réglée en position longitudinale sur l'une quelconque des barres 16 du châssis. Cette platine 68 coopère avec un étrier oblique 70 lequel est relié à la platine par deux vis 72. Il en résulte que la barre longitudinale 16 est prise entre la platine 68 et l'étrier 70. Lorsque les deux vis sont serrées, la platine est maintenue en position fixe par rapport à la barre longitudinale 16, de même que la tige 64 dont la position est réglable en hauteur. Il suffit pour cela de faire correspondre l'un des trous 66 de cette tige avec un trou de la platine 68 et de faire traverser ces deux trous par une goupille ou analogue (non représenté).

Dans l'exemple représenté, le dispositif 10 comprend une charrue du type porté, encore appelée "charrue vigneronne", c'est-à-dire dépourvue de roues. La position de la charrue par rapport à la surface supérieure du matériau M peut être ajustée en hauteur par la fixation trois points du tracteur. Cette charrue peut se présenter avec différentes dimensions en fonction des applications souhaitées. Pour les charrues les plus importantes, la largeur peut être comprise par exemple entre 2,20m et 3m, alors que les charrues vigneronnes standard ne dépassent pas 2m en largeur.

Le nombre de socs est variable et, en dehors du butteur, est généralement compris entre 4 et 8. Le réservoir porté par le châssis peut avoir une capacité variable, généralement de 300 litres à 600 litres. Il est avantageux que le tracteur (non représenté) comporte un chargeur avant, encore appelé pelle mécanique, qui permet le cas échéant de déblayer le matériau et qui fait en outre contrepoids au dispositif lui même.

Le dispositif de l'invention permet ainsi d'exercer une action combinée par les socs et la rampe d'aspersion, dont les jets sont dirigés vers les socs, c'est-à-dire vers le matériau qui est retourné et mélangé par les socs.

Ceci permet d'envoyer directement le liquide de traitement sur le matériau qui est retourné et mélangé par les socs.

Le matériau ainsi traité peut être ensuite récupéré par un engin mécanique approprié (bulldozer ou autre) et être par exemple incinéré ou retraité en vue de sa valorisation.

## Revendications

1. Dispositif pour le traitement d'un matériau comprenant une charrue (10) propre à être attelée à un tracteur et comprenant un châssis (12) portant une multiplicité d'outils (22D, 22G), un réservoir (24) propre à contenir un liquide de traitement, une pompe (26) reliée au réservoir et une rampe d'aspersion (34) portée à l'arrière du châssis et reliée à la pompe pour envoyer le liquide de traitement sur le matériau retourné et mélangé par les outils, **caractérisé en ce que** les outils sont des socs (22D, 22G) ayant une forme choisie pour retourner et mélanger superficiellement un matériau humide (M), en particulier une boue, épandu au sol, sans défoncer le matériau et sans défoncer le sol sous-jacent.

2. Dispositif selon la revendication 1, **caractérisé en ce que** les socs (22D, 22G) ont un profil asymétrique et comprennent des socs à profil à droite (22D) et des socs à profil à gauche (22G).

3. Dispositif selon l'une des revendications 1 et 2, **caractérisé en ce que** chaque soc (22D, 22G) comprend une pointe d'attaque (60) relevée et tournée vers le haut pour retourner et mélanger superficiellement le matériau humide, et un versoir (62) de forme et de dimensions choisies en fonction du matériau à traiter.

4. Dispositif selon l'une des revendications 1 à 3, **caractérisé en ce qu'**il comprend des moyens de fixation réglables (16, 64, 68, 70) propres à disposer les socs en des emplacements choisis du châssis.

5. Dispositif selon l'une des revendications 1 à 4, **caractérisé en ce que** le châssis (12) comprend des barres longitudinales (16) espacées sur lesquelles les socs (22D, 22G) peuvent être fixés chacun de manière réglable dans le sens de la longueur et dans le sens de la hauteur.

6. Dispositif selon la revendication 5, **caractérisé en ce que** les barres longitudinales (16) sont fixées réglables sur deux poutres transversales (18, 20) pour permettre de régler leurs espacements mutuels.

7. Dispositif selon l'une des revendications 1 à 6, **caractérisé en ce qu'**il comprend en outre un soc double (38), encore appelé "butteur", propre à être fixé dans une position centrale du châssis (12) pour stabiliser le déplacement de la charrue.

8. Dispositif selon l'une des revendications 1 à 7, **caractérisé en ce que** le réservoir (24) et la pompe (26) sont portés par le châssis (12).

9. Dispositif selon l'une des revendications 1 à 8, **caractérisé en ce que** la pompe (26) est une pompe basse pression à alimentation électrique.

10. Dispositif selon l'une des revendications 1 à 9, **caractérisé en ce que** la rampe d'aspersion (34) comprend au moins un tronçon (34C, 34D, 34G) orientable par rapport au châssis (12) pour envoyer le liquide de traitement avec une orientation réglable.

11. Dispositif selon l'une des revendications 1 à 10, **caractérisé en ce que** la rampe d'aspersion (34) comprend des buses directionnelles (40) propres à envoyer le liquide de traitement vers les socs.

12. Dispositif selon l'une des revendications 1 à 11, **caractérisé en ce que** la charrue est de type porté et comprend un attelage (14) propre à permettre son attache à la fixation trois points (FP) d'un tracteur.

## Patentansprüche

1. Vorrichtung zur Behandlung eines Materials, die einen Pflug (10) umfasst, der dazu ausgelegt ist, an einen Traktor angehängt bzw. angekoppelt zu werden und ein Untergestell (12) umfasst, das eine Vielzahl von Werkzeugen (22D, 22G), einen zum Enthalten einer Behandlungsflüssigkeit ausgelegten Vorratsbehälter (24), eine mit dem Behälter verbundene Pumpe (26) und eine Besprengungsrampe (34) haltert, die im hinteren Teil des Untergestells gehaltert und mit der Pumpe verbunden ist, um die Behandlungsflüssigkeit auf das durch die Werkzeuge gewendete und gemischte Material auszubringen,
**dadurch gekennzeichnet, dass**
die Werkzeuge Pflugscharen (22D, 22G) mit einer ausgewählten Form sind, um ein feuchtes Material (M), insbesondere einen auf dem Boden ausgebreiteten Schlamm, oberflächlich zu wenden und zu mischen, ohne das Material zu zerstören und ohne den darunter liegenden Boden zu zerstören.

2. Vorrichtung nach Anspruch 1,
**dadurch gekennzeichnet, dass**
die Pflugscharen (22D, 22G) ein asymmetrisches Profil haben und Pflugscharen mit einem rechten Profil (22D) und Pflugscharen mit einem linken Profil (22G) umfassen.

3. Vorrichtung nach einem der Ansprüche 1 oder 2,
**dadurch gekennzeichnet, dass**
jede Pflugschar (22D, 22G) eine Angriffsspitze (60), die erhoben und nach oben gewandt ist, um das feuchte Material oberflächlich zu wenden und zu mischen, und ein Streichblech (62) umfasst, dessen Form und Abmessungen in Abhängigkeit von dem zu behandelnden Material ausgewählt sind.

4. Vorrichtung nach einem der Ansprüche 1 bis 3,
**dadurch gekennzeichnet, dass**
sie einstellbare Befestigungseinrichtungen (16, 64, 68, 70) umfasst, die dazu ausgelegt sind, die Pflugscharen an ausgewählten Stellen des Untergestells zu befestigen.

5. Vorrichtung nach einem der Ansprüche 1 bis 4,
**dadurch gekennzeichnet, dass**
das Untergestell (12) beabstandete Längsstangen (16) umfasst, an denen die Pflugscharen (22D, 22G) jeweils in der Längsrichtung und in der Höhenrichtung verstellbar befestigt werden können.

6. Vorrichtung nach Anspruch 5,
**dadurch gekennzeichnet, dass**
die Längsstangen (16) einstellbar auf zwei Querträgern (18, 20) befestigt sind, um die Einstellung ihrer gegenseitigen Abstände zu ermöglichen.

7. Vorrichtung nach einem der Ansprüche 1 bis 6,
**dadurch gekennzeichnet, dass**
sie darüber hinaus eine, auch "Häufler" genannte Doppelpflugschar (38) umfasst, die dazu ausgelegt ist, an einer zentralen Position des Untergestells (12) befestigt zu sein, um das Verfahren des Pflugs zu stabilisieren.

8. Vorrichtung nach einem der Ansprüche 1 bis 7,
**dadurch gekennzeichnet, dass**
der Vorratsbehälter (24) und die Pumpe (26) vom Untergestell (12) gehaltert sind.

9. Vorrichtung nach einem der Ansprüche 1 bis 8,
**dadurch gekennzeichnet, dass**
die Pumpe (26) eine elektrisch gespeiste Niederdruckpumpe ist.

10. Vorrichtung nach einem der Ansprüche 1 bis 9,
**dadurch gekennzeichnet, dass**
die Besprengungsrampe (34) mindestens ein Teilstück (34C, 34D, 34G) umfasst, das im Verhältnis zum Untergestell (12) so ausgerichtet werden kann, dass die Behandlungsflüssigkeit mit einer einstellbaren Ausrichtung ausgebracht wird.

11. Vorrichtung nach einem der Ansprüche 1 bis 10,
**dadurch gekennzeichnet, dass**
die Besprengungsrampe (34) gerichtete Düsen (40) umfasst, die dazu ausgelegt sind, die Behandlungsflüssigkeit zu den Pflugscharen auszubringen.

12. Vorrichtung nach einem der Ansprüche 1 bis 11,
**dadurch gekennzeichnet, dass**
der Pflug von der Art eines Anhängers ist und eine Kuppelvorrichtung (14) umfasst, die dazu ausgelegt ist, seine Befestigung an der Dreipunktbefestigung (FP) eines Traktors zu ermöglichen.

## Claims

1. Device for treating a material, comprising a plough (10) which can be hitched to a tractor and comprises a chassis (12) bearing a number of tools (22D, 22G), a tank (24) able to contain a treatment liquid, a pump (26) connected to the tank and a spray boom (34) carried at the rear of the chassis and connected to the pump to deliver the treatment liquid onto the material turned over and mixed by the tools, **characterized in that** the tools are ploughshares (22D, 22G) having a shape that is chosen for turning over and superficially mixing a wet material (M), particularly a sludge or slurry, spread on the ground, without breaking up the material and without breaking up the underlying soil.

2. Device according to Claim 1, **characterized in that** the ploughshares (22D, 22G) have an asymmetric profile and comprise ploughshares with a right-handed profile (22D) and ploughshares with a left-handed profile (22G) .

3. Device according to one of Claims 1 and 2, **characterized in that** each ploughshare (22D, 22G) comprises a leading tip (60) which is raised and turned upwards in order to turn the wet material over and superficially mix it, and a mouldboard (62) the shape and dimensions of which are chosen to suit the material that is to be treated.

4. Device according to one of Claims 1 to 3, **characterized in that** it comprises adjustable fixing means (16, 64, 68, 70) able to arrange the ploughshares at chosen locations on the chassis.

5. Device according to one of Claims 1 to 4, **characterized in that** the chassis (12) comprises spaced longitudinal bars (16) on which the ploughshares (22D, 22G) can each be fixed such that they can be adjusted in the longitudinal and heightwise directions.

6. Device according to Claim 5, **characterized in that** the longitudinal bars (16) are fixed adjustably on two crossbeams (18, 20) so that their mutual spacings can be adjusted.

7. Device according to one of Claims 1 to 6, **characterized in that** it further comprises a double ploughshare (38), also known as a "ridger", which can be fixed in a central position of the chassis (12) to stabilize the movement of the plough.

8. Device according to one of Claims 1 to 7, **characterized in that** the tank (24) and the pump (26) are carried by the chassis (12).

9. Device according to one of Claims 1 to 8, **characterized in that** the pump (26) is an electrically driven low-pressure pump.

10. Device according to one of Claims 1 to 9, **characterized in that** the spray boom (34) comprises at least one portion (34C, 34D, 34G) which is orientable with respect to the chassis (12) so as to deliver the treatment liquid at an adjustable orientation.

11. Device according to one of Claims 1 to 10, **characterized in that** the spray boom (34) comprises directional nozzles (40) able to deliver the treatment liquid to the ploughshares.

12. Device according to one of Claims 1 to 11, **characterized in that** the plough is of the mounted type and comprises a hitch (14) able to allow it to be hitched to the three-point hitch (FP) of a tractor.
